(19) Europäisches Patentamt / European Patent Office / Office européen des brevets

(11) **EP 4 135 262 A1**

(12) **EUROPEAN PATENT APPLICATION**
published in accordance with Art. 153(4) EPC

(43) Date of publication:
**15.02.2023 Bulletin 2023/07**

(51) International Patent Classification (IPC):
**H04L 12/00** (1990.01)

(21) Application number: **21784834.0**

(86) International application number:
**PCT/CN2021/076003**

(22) Date of filing: **08.02.2021**

(87) International publication number:
**WO 2021/203829 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2020 CN 202010278035**

(71) Applicant: **Hiscene Information Technology Co., Ltd.**
**Shanghai 201203 (CN)**

(72) Inventor: **WU, Haibin**
**Shanghai 201203 (CN)**

(74) Representative: **Murgitroyd & Company**
**Murgitroyd House**
**165-169 Scotland Street**
**Glasgow G5 8PL (GB)**

(54) **DATA TRANSMISSION RATE CONTROL METHOD AND SYSTEM, AND USER EQUIPMENT**

(57) Disclosed in the present disclosure are a data transmission rate control method and system, and a user equipment. The method comprises: S1, receiving a data packet sent by an external end to a local end and storing the data packet; S2, respectively reading data packets received at the local end within pre-set time periods before and after the latest code rate adjustment, and recording the corresponding number of read data packets; and S3, determining the current code rate adjustment state, and according to a first determination result, entering a code rate increasing/decreasing processing flow, wherein the code rate increasing/decreasing processing flow comprises updating a code rate adjustment state according to the read data packets and the corresponding number. According to the present disclosure, a code rate can be adjusted in a timely manner, and congestion control is achieved.

Receive and store data packets sent by an external terminal to a local terminal. — S1

Read the data packets received in the local terminal within a preset time before and after a latest bit rate adjustment, and record a corresponding quantity of the read data packets. — S2

Determine a current bit rate adjustment state, and enter a bit rate increasing/decreasing processing flow according to a first determination result, where the bit rate increasing/decreasing processing flow comprises updating a bit rate adjustment state according to the read data packets and the corresponding quantity. — S3

FIG. 1A

EP 4 135 262 A1

**Description**

CROSS REFERENCE TO RELATED APPLICATION

This application claims the priority of Chinese Patent Application No. 202010278035.7, entitled "DATA TRANSMISSION RATE CONTROL METHOD AND SYSTEM, AND USER EQUIPMENT", filed on April 10, 2020, the disclosure of which is incorporated herein by reference in its entirety.

FIELD OF THE DISCLOSURE

The present disclosure relates to a communication technology, and more particularly, to a method for controlling data transmission rate, a related system, and a user equipment.

BACKGROUND

Network congestion is a common network transmission problem in IP-based packet switching networks. It has a serious impact on the quality of network transmission. Network congestion is one of the main causes of network throughput reduction and network packet loss. These problems make the upper-layer applications unable to effectively use the network bandwidth to obtain high-quality network transmission effects. Especially in the communication field, problems such as packet loss, delay, and jitter caused by network congestion seriously affect the communication quality. If these problems cannot be well solved, a communication product cannot be used normally in the actual environment.
Network congestion is a common phenomenon and occurs more frequently in a WiFi environment. In audio and video calls, network congestion can cause a significant decrease in the network quality and the user perception. For example, the success rate of incoming and outgoing calls is low, multiple tries are required to successfully make a call, calls are easily dropped; and/or sound and video are stuck, etc.

Technical problem

The most popular congestion control algorithms are:

1) Tail Drop algorithm, if the output buffer overflows, the newly arrived data packets will be discarded. The algorithm does not need to select discarded packets, but when there is no buffer space, the packets will be discarded.
2) RED algorithm. The basic idea of this algorithm is to detect congestion by monitoring the average length of the router's output port queue. Once congestion is approaching, it will randomly select connections to notify that there will be congestion, so that they can reduce congestion window and reduce the speed of sending data before the queue overflows to cause packet loss, thereby alleviating network congestion. RED is also simpler to implement because it is based on a FIFO queue scheduling policy and simply discards packets that are entering the router.
3) The BLUE algorithm: It uses packet loss time and link idle events to manage network congestion. This algorithm has a packet loss probability p. When continuous packet loss occurs due to queue overflow, the algorithm will increase p. When there is an empty queue, the algorithm will reduce p. Therefore, the BLUE algorithm can effectively control the speed of sending congestion notification information.
4) The SFB algorithm: It is a FIFO queue algorithm and is somewhat similar to BLUE, but can identify the limiter rate of non-responsive flows.
5) The GCC algorithm in WebRTC: This algorithm is divided into two parts, the sender controls the bit rate based on the packet loss rate, and the receiver controls the bit rate based on the delay. The sender relies on the RTCP RR message to work. WebRTC receives the RTCP RR message from the receiver at the sender and dynamically adjusts the sender's bit rate as according to the packet loss rate information carried in its Report Block. According to the delay-based bit rate control run on the receiving end, WebRTC estimates the network delay m(t) according to the time delay of the arrival of the data packets through the arrival time filter, and then determines the current network congestion status through the overload detector. The rate controller calculates the far-end estimated maximum bit rate Ar according to the rules. After getting Ar, the Ar is reported back to the sender through the RTCP REMB message. The sender integrates As, Ar and the preconfigured upper and lower limits to calculate the final target bit rate A, which will be used in modules such as Encoder, RTP, and PacedSender to control the bit rate of the sender.
6) The congestion control BBR algorithm announced by Google in 2016: It abandons complex mathematical models and theoretical reasoning. Instead, it uses the strategy of real-time statistics of received packets to calculate the immediate upstream bandwidth of the sender. It is not only suitable for use in TCP transmission mode, but also can be used in UDP transmission mode. This algorithm greatly improves TCP throughput and has been integrated into the Linux 4.9 kernel.

The above lists 6 commonly used network congestion control algorithms. Although each has its own advantages, all of them have shortcomings. This is because the network congestion algorithm mainly faces three difficulties below.

1. The occurrence of network congestion is a process of changes. During this process, the real-time bandwidth of the network fluctuates randomly and irregularly, so it is very difficult to quickly and accurately calculate the real-time network bandwidth.

2. The bit rate adjustment of the video encoder is delayed and cannot take effect immediately. Generally, a code stream of a specific size can be generated after a delay of 1 or 2 seconds.

3. The phenomenon of network congestion in different networks is different. In some networks, data packets are lost with the increase of RTT. In some other networks, RTTs do not change significantly but the packet loss occurs. In short, the phenomena in different networks are very different. This introduces a lot of difficulties to the anti-network congestion algorithm.

Specifically, the Tail Driop, RED, BLUE, and SFB algorithms are for ordinary data transmission and are not suitable for streaming media communications. The GCC algorithm of WebRTC is a typical algorithm for congestion control of streaming media, but its handling of the above three problems is not very comprehensive. It is a congestion control algorithm based on delay estimation and packet loss. The algorithm includes that the receiver performs a Kalman estimation algorithm and then the sender performed the bit rate adjustment according to the estimation result. The Transport CC algorithm is a congestion control algorithm based on the linear prediction of the sender. Like the GCC algorithm, it is the congestion control judgment based on delay. These two algorithms have different degrees of defects, and the process of implementing the algorithm is too academic. For example, the GCC algorithm has a pre-value of 2%/10% packet loss rate, but in fact, the occurrence of congestion does not necessarily lead to a packet loss. And the packet loss does not necessarily represent congestion, which is invalid for the GCC algorithm. The main body of the GCC algorithm based on delay estimation has no contention rate with bandwidth memory packet loss at this stage. The Salsify algorithm proposed by Stanford University estimates the encoding speed of the entire encoder based on the delay between video frames, but it must be executed on the basis of the encoder. It cannot meet the requirements of transmitting the video to the server for distribution. If only segmented congestion control is performed, re-decoding and re-encoding need to be performed on the server, so it cannot meet the demands for real-time video application. The BBR algorithm released by Google can be used in the TCP and UDP protocols, but the receiver needs to return a receipt to the sender when it receives each data packet, which greatly reduces the superiority of UDP transmission. In addition, the BBR algorithm has 4 states (STARTUP, DRAIN, PROBE_BW, PROBE_RTT). Thus, the BBR algorithm needs to switching between the states, and thus the BBR algorithm cannot respond to network congestion in time.

SUMMARY

One objective of an embodiment of the present disclosure is to provide a data transmission rate control method, a system and a user equipment to solve the above-mentioned issues. According to an embodiment, the present disclosure transmits less statistical information data between the external terminal and the local terminal, can calculate the current bandwidth accurately and quickly, and adjust the bit rate of the data sent by the local terminal to the external terminal in time.

For realizing the objective, according to an embodiment of the present disclosure, a data transmission rate control method is disclosed. The data transmission rate control method comprises: S1: receiving and storing a data packets sent by an external terminal to a local terminal; S2: respectively reading the data packets received in the local terminal within a preset time before and after a latest bit rate adjustment, and recording a corresponding quantity of the read data packets; and S3: determining a current bit rate adjustment state, and entering an bit rate increasing/decreasing processing flow according to a first determination result; wherein the bit rate increasing/decreasing processing flow comprises updating a bit rate adjustment state according to the read data packets and the corresponding quantity.

For realizing the objective, according to another embodiment of the present disclosure, a data transmission rate control system is disclosed. The data transmission rate control system comprises: a receiving storage module, configured to receive and store data packets sent by the external terminal to the local terminal; a reading and recording module, configured to respectively read the data packets received by the receiving storage module within a preset time before and after a latest bit rate adjustment and record a corresponding quantity of the read data packets; a bit rate adjustment control module, configured to determine a current bit rate adjustment state and calling the increase/decrease bit rate processing module according to a determination result; and a bit rate increase/decrease processing module, configured to perform a bit rate increasing/decreasing processing flow. The increase/decrease bit rate processing flow comprises updating the current bit rate adjustment state according to the data packets read by the reading and recording module and the corresponding quantity.

For realizing the objective, according to still another embodiment of the present disclosure, a user equipment for controlling data transmission rate is provided. The user equipment includes a processor and a memory storing one or more computer-executable instructions. The one or more computer-executable instructions are executed by the processor to perform the method of the present disclosure.

For realizing the objective, according to yet another embodiment of the present disclosure, a computer readable storage media storing computer-executable instructions is provided. The computer-executable instructions are executed by a processor to perform the method of the present disclosure.

Advantageous effect

The present disclosure transmits less statistical information data between the external terminal and the local terminal, can calculate the current bandwidth accurately and quickly, and adjust the bit rate of the data sent by the local terminal to the external terminal in time, thus realizing congestion control well.

BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other drawings from these accompanying drawings without creative efforts.

Fig. 1A is a flowchart of the data transmission rate control method according to a first embodiment of the present disclosure.

Fig. 1B is a flowchart of the data transmission rate control method according to a second embodiment of the present disclosure.

Fig. 2 is a flow chart of a bit rate increasing processing flow according to an embodiment of the present disclosure.

Fig. 3 is a flow chart of a bit rate decreasing processing flow according to an embodiment of the present disclosure.

Fig. 4 is a diagram of a data transmission rate control system according to a third embodiment of the present disclosure.

Fig. 5 is a diagram of a user equipment used in a data transmission rate control system according to a fourth embodiment of the present disclosure.

DETAILED DESCRIPTION

Embodiments of the present disclosure are illustrated in detail in the accompanying drawings, in which like or similar reference numerals refer to like or similar elements or elements having the same or similar functions throughout the specification. The embodiments described below with reference to the accompanying drawings are exemplary and are intended to be illustrative of the present disclosure, and are not to be construed as limiting the scope of the present disclosure.

All of the terminologies containing one or more technical or scientific terminologies have the same meanings that persons skilled in the art understand ordinarily unless they are not defined otherwise. For example," arrange," "couple," and "connect," should be understood generally in the embodiments of the present disclosure. For example, "firmly connect," "detachably connect," and "integrally connect" are all possible. It is also possible that "mechanically connect," "electrically connect," and "mutually communicate" are used. It is also possible that "directly couple," "indirectly couple via a medium," and "two components mutually interact" are used.

Different methods or examples are introduced to elaborate different structures in the embodiments of the present disclosure. To simplify the method, only specific components and devices are elaborated by the present disclosure. These embodiments are truly exemplary instead of limiting the present disclosure. Identical numbers and/or letters for reference are used repeatedly in different examples for simplification and clearance. It does not imply that the relations between the methods and/or arrangement. The methods proposed by the present disclosure provide a variety of examples with a variety of processes and materials. However, persons skilled in the art understand ordinarily that the application of other processes and/or the use of other kinds of materials are possible.

In the present disclosure, the local terminal is the current client and the external terminal is the external server for description. The network congestion control algorithm used in the data transmission rate control method in the present disclosure is located in the client. It should be noted that the external terminal may also be other clients.

After the client sends data (for example, audio and video data) to the server, the server sends relevant data packets to the client according to the received data. The client stores the received data packets, for example, in the data pool in the client. The data pool represents a receiving storage module in the client. The storage location of the data packets is not limited. In addition to the data pool, it can also be stored in other storage modules of the client. In the following description, the data are stored in the data pool as an example. According to an embodiment, the specific processing flow is as follows: the data pool continuously receives data packets and executes the network congestion control algorithm of the present disclosure: reading the data packet information in the data pool that meets the preset condition, and then determining the current bit rate adjustment state to execute the bit rate increasing/decreasing flow. The adjustment result of the current bit rate obtained in the processing flow is the target bit rate for the client to send data to the server next time. Here, in the bit rate increasing/decreasing processing flow, the loop state of the bit rate increase/decrease processing flow is further determined. If the loop state is to continue the loop, then the flow returns to re-determining the current bit rate adjustment state to execute the bit rate increasing/decreasing processing flow. If the loop status is to stop the loop, after the preset condition is met, the network control algorithm of the present disclosure is re-executed (reading the data packet information in the data pool that meets the preset condition, and then determining the status to execute the bit rate increasing/decreasing processing flow).

The network congestion control algorithm of the present disclosure is an independent thread, which is called by the client according to the preset condition (for example, a preset time, such as every 1 second), and uses the data packets in the data pool for calculation. For example, about 1 second, the thread will execute the current algorithm once, and the calculation result of the algorithm is to change the target bit rate of the data sent by the client to the server. At the same time, the server will also send relevant data packets after a preset time interval (for example, 1 second), and these data packets are placed in the data pool.

For easily illustrating the algorithm, the variables in the bit rate increasing/decreasing processing flow of the network congestion control algorithm of the present disclosure are defined as follows:

rtt: heartbeat value in this algorithm

avg_rtt: average heartbeat value; $avg\_rtt = (rtt_0 + ... + rtt_n)/(n+1)$

time_ms: the time interval from the last time the server sends a data packet, in milliseconds avg_time_ms: average time interval; $avg\_time\_ms = (time\_ms_0 + ... + time\_ms_n)/(n+1)$

sent_size: In the interval of_time_ms, the server receives the number of bytes of data sent by the client, in bytes

avg_sent_size: average number of data bytes; $avg\_sent\_size = (sent\_size_0 + ... + sent\_size_n)/(n+1)$

lost: the packet loss rate of the data sent by the client to the server, the unit is an integer

avg_lost: average packet loss rate; $avg\_lost = (lost_0 + ... + lost_n)/(n+1)$

received_ts: the timestamp printed each time the data pool stores the data packets sent by the server

change_ts: the timestamp of the last time the bit rate was adjusted by the algorithm, in milliseconds

pre_num: the number of data packets read before the latest bit rate adjustment.

last_num: the number of data packets after the latest bit rate adjustment read

time_out: indication that the preset time (for example, 4 seconds) has passed since the latest bit rate change, but the data pool has not received any data sent by the server, which indicates that the network is now seriously congested. This variable will be updated during the bit rate increasing/decreasing process.

loop: loop flag, which will be updated during the bit rate increasing/decreasing processing flow; loop=true means to continue the loop, at this time, the judgment of the current bit rate adjustment status is immediately executed, and the flow re-enters the process of increasing/decreasing the bit rate; loop=false means to stop the loop, the flow waits until the next time the algorithm is called after the preset condition is met, re-reads the data, and then re-executes the judgment of the current bit rate adjustment status, and enters the bit rate increasing/decreasing process.

*increase_tab*: increase the bit rate table; for example, the increasing bit rate table of the bit rate increase value {50K, 50K, 50K, 50K, 100K, 200K, 200K, 800K} is set.

*cur_index*: the current index of the increasing bit rate table; for example, for an increase bit rate table with 8 bit rate increasing values, the index range is set to [0:7] and initialized to 0.

*cur_bitrate*: current bit rate

*target_bitrate*: target bit rate; at the beginning of each execution of the algorithm, set *target_bitrate=cur_bitrate*

status: the current bit rate adjustment status of the algorithm, there are five statuses in total, they are:

*kIncreasing*: the bit rate is increasing

*kIncreased*: the bit rate is increased

*kDecreasingWithServer*: reduce the bit rate according to the data packets sent by the server

*kDecreasingNotWithServer*: does not reduce the bit rate according to the data packets sent by the server

*kDecreased:* the bit rate is reduced.

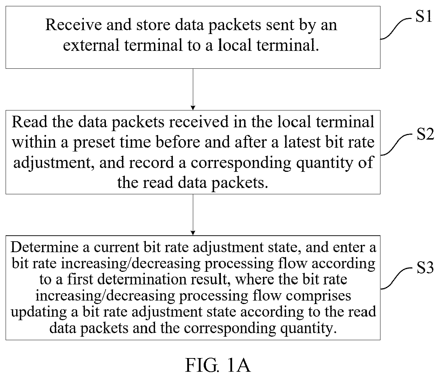

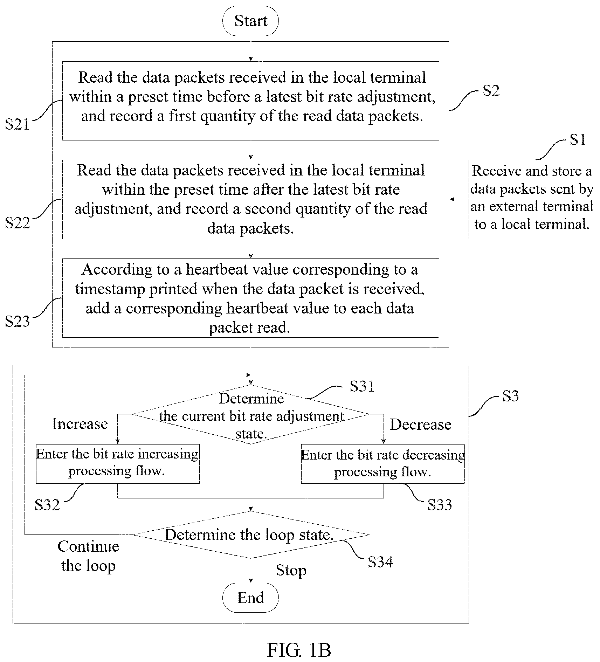

Please refer to Fig. 1A and Fig. 1B. Fig. 1A is a flowchart of the data transmission rate control method according to a first embodiment of the present disclosure. Fig. 1B is a flowchart of the data transmission rate control method according to a second embodiment of the present disclosure.

As shown in Fig. 1A, the data transmission rate control method includes the following steps: S1: receiving and storing data packets sent by an external terminal to a local terminal; S2: respectively reading the data packets received in the local terminal within a preset time before and after a latest bit rate adjustment, and recording a corresponding quantity of the read data packets; and S3: determining a current bit rate adjustment state, and entering an bit rate increasing/decreasing processing flow according to a first determination result. Here, the bit rate increasing/decreasing processing flow comprises updating a bit rate adjustment state according to the read data packets and the corresponding quantity. A detailed description is given below.

Regarding step S1, the data packets sent by the external terminal to the local terminal are received and stored.

After the local terminal sends data to the external terminal, the external terminal will send relevant data packets to the local terminal every preset time (for example, 1 second) according to the received data. Here, the local terminal is the current client and the external terminal is the external server. The external terminal can also be other clients. The client stores the received data packets, for example, in the data pool on the client. The data pool represents a receiving storage module in the client. The storage location of the data packets is not limited. In addition to the data pool, it can also be stored in other storage modules of the client. In the following disclosure, the data are stored in the data pool as an example.

Furthermore, the data packet includes at least one of the following: the time interval *time_ms* from the last time the external terminal sends a data packet to the local terminal; within the time interval, the data byte number *sent_size* of the data sent by the local terminal and received by the external terminal; and the total packet loss rate *lost* during the time interval. When the data pool receives and caches the data packets sent by the server, it further adds a timestamp *received_*ts to the data packet printed for subsequent use.

Regarding step S2, the data packets received in the local terminal within the preset time before and after the latest bit rate adjustment are respectively read, and the corresponding number/quantity of the read data packets is recorded.

As shown in Figure 1B, the step S2 further comprises: S21: reading the data packets received in the local terminal within a preset time before the latest bit rate adjustment, and recording a first quantity of the read data packets; S22: reading the data packets received in the local terminal within the preset time after the latest bit rate adjustment, and record a second quantity of the read data packets; and S23: according to a heartbeat value corresponding to a timestamp printed when the data packet is received, adding a corresponding heartbeat value to each data packet read in steps S21 and S22.

Specifically, the first step is: find the data packets of *change_ts-5000 < received_ts <= change_ts,* and the number of read data packets is recorded as the first quantity *pre_num.* That is, the data pool corresponding to the received data packet that is smaller than the timestamp *change_ts* of the latest bit rate adjustment (within a preset time) is read, and the value of *pre num* is increased by one when a data packet is read. In some embodiments, *pre_num* is no more than 8. The second step is: find the packet of *change_ts*+2000 <=*received_ts*, and the number of packets read out is recorded as the second quantity *last_num.* That is, the step is to read a data packet received by a data pool larger than *change_ts* (within the preset time), and when a data packet is read, the *last_num* value is increased by one. In some embodiments, *last_num* is no more than 8. The third step is: find the heartbeat value rtt when the timestamp received_ts is printed, and then add their corresponding heartbeat value rtt to the data packets found in the first and second steps. It should be noted that, the settings of the first quantity and the second quantity not greater than 8 may be changed according to actual requirements, such as the adjustment accuracy and the adjustment rate, and thus are not limited here. In addition, the above preset time is only an example, and it can be flexibly changed according to the actual situation. For example, the first step is to find the data packet of *change_ts*-3000 < *received_ts* <=*change_ts,* and the second step is to find the data packet of *change_ts*+3000 <=*received_ts*. These changes fall within the scope of the present disclosure.

Regarding step S3, the current bit rate adjustment state is determined, and the bit rate increasing/decreasing processing flow is performed according to the first judgment result. Here, the bit rate increasing/decreasing processing flow includes updating the bit rate adjustment state according to the read data packets and the corresponding quantity.

In some embodiments, according to the current bit rate adjustment state, the bit rate increase processing flow or the bit rate decreasing processing flow is entered. In addition, as shown in Fig. 1B, step S3 further includes: S31: determining the current bit rate adjustment state, and obtaining the first judgment result; S32: if the first judgment result is an increase, entering the bit rate increasing processing flow; S33: if the first judgment result is a decrease, entering the bit rate decreasing processing flow, wherein the bit rate increasing processing flow and the bit rate decreasing processing flow both update the bit rate adjustment status according to the read data packets and the corresponding quantity; and S34: determining the loop state of the bit rate increasing/decreasing processing flow, obtaining the second judgment result; if the second judgment result is to continue the loop, re-enter step S3 to execute the operation of determining the current bit rate adjustment state; and if the second judgment result is to stop the loop, stop executing the bit rate increasing/decreasing processing flow. Preferably, after stopping the execution of the bit rate increasing/decreasing processing flow, when the preset condition is met, the algorithm is re-invoked. That is, the algorithm sequentially goes back to step S2 and step S3 to data packet reading and determine the current bit rate adjustment state.

Furthermore, if the current bit rate adjustment state is bit rate increasing or bit rate increased, the bit rate increasing processing flow is performed, otherwise the bit rate decreasing processing flow is performed. That is, whether to enter the bit rate increasing processing flow or the bit rate decreasing flow is mainly based on the determination of the status variable. When the status variable is determined, the judgment of *status==kIncreasing || status==kIncreased* is executed. Among them, "||" represents the logical operator "or", and the operation rule of logical "or" is that when one is true, it is true, and the subsequent calculation will not be performed, and it will directly enter the bit rate increasing processing flow. If the expression on the left is false, then the expression on the right is calculated. When both left and right are false, the bit rate decreasing processing flow is entered.

In addition, the initial state of the bit rate adjustment state is preset to *kIncreasing.* That is, when the client calls the algorithm for the first time, the corresponding bit rate adjustment status is *kIncreasing,* and then enters the bit rate increasing processing flow, and updates the bit rate adjustment status in the bit rate increasing processing flow. When the algorithm is subsequently called again, the current bit rate adjustment state is the result of the previous bit rate adjustment state.

Furthermore, the bit rate increasing processing flow comprises the following steps:

S311: Determine whether the bit rate adjustment state is bit rate increasing When the bit rate adjustment state is bit rate increasing , the bit rate directly increases, the bit rate adjustment state is updated as bit rate increased, the loop state is updated as stopping the loop, and executing the bit rate increasing processing flow is stopped, and returning to execute step S2 and step S3 in sequence after a preset condition is met, when the bit rate adjustment state is not bit rate increasing, performing step S312. In some embodiments, the above step of returning to execute step S2 and step S3 in sequence means that the algorithm is called again to first read the data packets in the data pool within the preset time before and after the latest bit rate adjustment and then to determine the current bit rate adjustment status. Since the current bit rate adjustment state is bit rate increased, the bit rate increasing process flow is subsequently entered. Here, the preset condition may be a preset time, for example, after waiting for 1 second before starting/calling the algorithm, steps S2 and S3 are executed in sequence. It should be noted that the preset time of 1 second is only an example, and can be changed according to actual network conditions, and thus is not limited in this present disclosure.

S312: Determining whether the second quantity is greater than 0. When the second quantity is greater than 0, step S313 is performed. When the second quantity is not greater than 0, step S314 is performed.

S313: Determine whether the second quantity is greater than a quantity threshold. When the second quantity is greater than a quantity threshold, the bit rate adjustment state is updated according to the read data packets and the corresponding quantity. When the second quantity is not greater than the quantity threshold, the loop state is updated as stopping the loop to stop executing the bit rate increase processing flow, and return to step S2 and step S3 in turn after the preset conditions is met. In some embodiments, the step of returning to execute step S2 and step S3 in sequence means the algorithm is called again to first read the data packets in the data pool within the preset time before and after the latest bit rate adjustment and then determine the current bit rate adjustment status. Since the current bit rate adjustment status is still bit rate increased, the subsequent the bit rate increasing processing flow is entered.

S314: Determine whether a time duration between the current time and the latest bit rate adjustment is greater than a time threshold. When the time duration between the current time and the latest bit rate adjustment is greater than the time threshold, updating the bit rate adjustment state to not reduce the bit rate according to the data packet sent by the external terminal, and updating the loop state to continue the loop to continue to re-enter and perform step S3. When the time duration between the current time and the latest bit rate adjustment is not greater than the time threshold, updating the loop state as a stop loop to stop performing the bit rate increasing processing flow and to return to step S2 and step S3 in turn after the preset condition is met. In some embodiments, the step S3 is continued and re-entered. That is, the current bit rate adjustment state is continued to be re-determined without waiting for the preset condition to be met before calling the algorithm. Since the current bit rate adjustment state is not to reduce the bit rate according to the data packets sent by the external terminal, the bit rate decreasing processing flow is directly entered subsequently.

In addition, in order to optimize the execution effect of the algorithm, after determining that the second quantity is greater than 0 in the step S312, the following steps are further performed: determining whether the data packets received by the data pool within the preset time after the latest bit rate adjustment have a sudden change (*checksmooth*); if there is no sudden change (*smooth*), executing step S313; and if there is a sudden change, updating the bit rate adjustment state to be reducing the bit rate based on the data sent by the external terminal and updating the loop state to continue the loop to re-enter step S3. In some embodiments, the step of re-entering step S3 means continuing re-determining the current bit rate adjustment state without waiting for the preset condition to be met before calling the algorithm. Since the current bit rate adjustment state is to reduce the bit rate according to the data packet sent by the external terminal, the bit rate decreasing processing flow is directly entered subsequently.

The specific determining mechanism for determining whether there is a sudden change comprises: calculating an average packet loss rate, an average heartbeat value according to the packet loss rate, heartbeat value in each data packet in the data packets received by the data pool within a preset time after the latest bit rate adjustment and the total number of data packets read *last num;* if the average packet loss rate is less than the preset packet loss threshold (such as 15, however, different thresholds could be set according to different network conditions) and the average heartbeat value is less than the preset heartbeat threshold (such as 200, however, different thresholds could be set according to different network conditions), it is determined that there is no sudden change; otherwise, it is determined that there is a sudden change. It should be noted that the judgment of the average packet loss rate and the average heartbeat value can also be performed alternatively. For example, only the average packet loss rate can be calculated, and it can be determined whether the average packet loss rate is less than the preset packet loss threshold. If the packet rate is less than the preset packet loss threshold, it is determined that there is no sudden change; otherwise, it is determined that there is a sudden change. Or only the average heartbeat value is calculated, and then it is determined whether the average heartbeat value is less than the preset heartbeat threshold. If the average heartbeat value is less than the preset heartbeat threshold, it is determined that there is no sudden change; otherwise, it is determined that there is a sudden change.

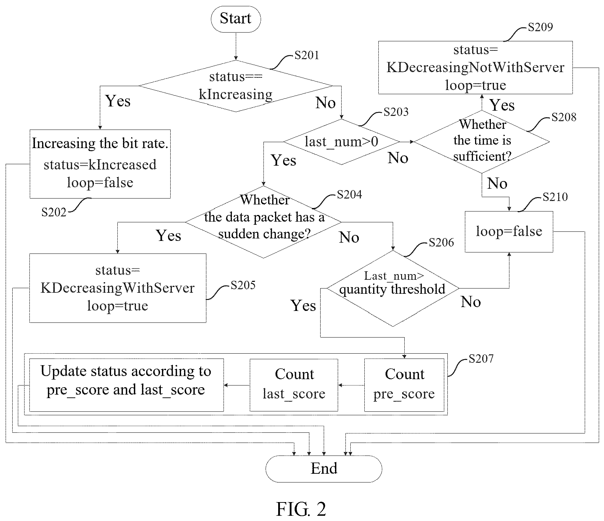

Please refer to Fig. 2. Fig. 2 is a flow chart of a bit rate increasing processing flow according to an embodiment of the present disclosure. A detailed description is disclosed as follows:

S201: after entering the bit rate increasing processing flow, first determining whether the bit rate adjustment status is bit rate increasing (*status==kIncreasing*), corresponding to step S311.

S202: if *status==kIncreasing,* directly increasing the bit rate, updating the bit rate adjustment state to bit rate increased (*status=kIncreased*), and setting loop=false, corresponding to step S311. That is, when the status is bit rate increasing, the bit rate is being increased. After that, the status becomes *kIncreased.* At the same time, the bit rate increasing processing flow should be finished so the corresponding loop=false means to exit the algorithm and wait for the preset condition (for example, wait for 1 second) to start/call the algorithm next time. After calling the algorithm next time, it sequentially performs step S2 for data packet reading and step S3 for determining the current bit rate adjustment state. In step S3, since *status==kIncreased,* it still enters the bit rate increasing processing flow.

In addition, the step of directly increasing the bit rate is: adjusting a target bit rate to a sum of the current bit rate and the corresponding bit rate in an increasing bit rate table corresponding to the current index; and auto-incrementing the current index after adjusting the target bit rate. That is, *target_bitrate=cur_bitrate + increase_tab[cur_index++]*. Among them, *cur_index++* means that the expression is executed first and then the current index is incremented by one automatically. When executing the expression, the original value of *cur_index* is used. Preferably, the boundary judgment is performed after the current index is incremented, and if the current index exceeds a maximum value of a preset index boundary after the current index is incremented, the current index is set as the maximum value. That is, for an index range of [0:7], if *cur_index++* exceeds 7, then *cur_index* is set to 7. In addition, the entire algorithm shares a *cur_index.* The above-mentioned values of *increase_tab* and *cur index* are only examples, and may be changed according to actual network conditions. These changes fall within the scope of the present disclosure.

S203: If the status is not *kIncreasing,* then *status==kIncreased,* and further determining whether the number of data packets *last num* received by the data pool within the preset time after the latest bit rate adjustment read is greater than 0, corresponding to step S312.

S204: if *last_num>0,* it means that the data pool has received the data packet sent by the server when the status is bit rate increased, and at this time, it is necessary to detect whether the data packet has a sudden change (checksmooth).

*Checksmooth* is used to determine whether there is a sudden change in the packet loss rate and heartbeat value in the input parameters. It mainly uses the data packets received by the data pool and the corresponding number *last num* within a preset time after the latest bit rate adjustment as parameters to determine the situation after the bit rate adjustment. Specifically, it calculates the *avg_rtt* and *avg_lost* in the *last num* data packets. If *avg_lost* is less than 15 and *avg_rtt* is less than 200, then it determines that there is no sudden change (that is, *smooth).* Optionally, the *avg_rtt* and *avg_lost* can also be calculated alternatively.

S205: if the data packet has a sudden change, the *status* becomes *KDecreasingWithServer* (the bit rate is reduced according to the data packet sent by the server), and the corresponding *loop=true.* It means to continue the loop and to re-enter step S3. That is, the *status* is immediately determined. Since *status==KDecreasingWithServer,* it will directly enter the bit rate decreasing processing flow. At this time, there is no need to pause and wait for the next time when the preset condition is met (for example, wait for 1 second) to restart/invoke the algorithm.

S206: if there is no sudden change in the data packet, further determining whether *last num* is greater than a quantity threshold (e.g., 3), corresponding to step S313.

S207: If *last_num >* the quantity threshold, updating the bit rate adjustment state according to the read data packets before and after the latest bit rate adjustment and the corresponding quantity, corresponding to step S313.

S208: if *last_num<=0,* it means that the data pool has not received any data packet sent by the server when the status is bit rate increased, and it determines whether the time is sufficient (*time_out*), corresponding to step S314.

Step 209: If the time is sufficient (*time_out==true*), it means that the network is congested, and the bit rate should be reduced at this time, so the *status* becomes *KDecreasingNotWithServer* (the bit rate is not reduced according to the data sent by the server (for example, the bit rate is directly reduced to a half of the current bit rate). The corresponding *loop=true.* This corresponds to step S314. It means to continue the loop and re-enter step S3. That is, the status is determined immediately. Since *status==KDecreasingNotWithServer,* it directly enters the bit rate decreasing processing flow. At this time, there is no need to pause and wait for the next time after the preset condition is met (for example, wait for 1 second) to restart/invoke the algorithm.

S210: If *last_num* <= the quantity threshold, or if the time is not sufficient (*time_out==false*), then setting *loop false* (respectively corresponding to step S313 and step S314). That is, it means to exit the algorithm and wait for the preset condition (for example, wait for 1 second) to restart/invoke the algorithm next time and execute step S2 and step S3 in sequence.

It should be noted that the above-mentioned quantity threshold for *last num* and the value of *time_out* are only examples, and can be changed according to actual network conditions. The threshold may also be other values such as 2 or 4. These changes fall within the scope of the present disclosure.

From the flow chart shown in Figure 2, it can be seen that the bit rate processing flow is as follows:

a) If the current *status* is *kIncreasing,* directly increasing the bit rate.

b) If the data pool did not receive any data packet sent by the server after the last change of the bit rate (corresponding to *status=kIncreased*), at this time, it is necessary to determine why the server did not send data. There are two reasons: First, the time from the last bit rate adjustment is sufficient (*time_out==true*), which means that the current network is seriously congested, and the algorithm should not reduce the bit rate according to the data sent by the server. The second is that it is not long enough from the last adjustment of the bit rate (*time_out==false*), so it continues to wait for the server to send enough data packets to analyze.

c) If the data pool has received enough data packets since the last time the bit rate was adjusted (corresponding to *status==kIncreased*), optionally, at the same time, there is no sudden change in these data packets, these data packets could be used to analyze the effect of the last bit rate adjustment. That is, the bit rate adjustment status is updated according to the read data packets before and after the latest bit rate adjustment and the corresponding quantity.

In addition, the step of updating the bit rate adjustment state according to the read data packets before and after the last bit rate adjustment and the corresponding quantity comprises: 1) calculating the first network score before the latest bit rate adjustment according to the read data packets received by the data pool within the preset time before the latest bit rate adjustment and the recorded first quantity of the read data packets. That is, this step is to analyze the network condition before the bit rate adjustment and use the score to determine. 2) calculating the second network score after the latest bit rate adjustment according to the read data packet received by the data pool within the preset time after the latest bit rate adjustment and the second quantity of the read data packet. That is, this step is to analyze the network condition after the bit rate adjustment and use the score to determine. 3) updating the bit rate adjustment state according to the first network score and the second network score. That is, this step is to update the bit the rate adjustment state according to the obtained scores before and after adjusting the bit rate.

Furthermore, the calculation method of the first network score comprises: according to the packet loss rate and the heartbeat value in each data packet received by the data pool within the preset time before the latest bit rate adjustment and the first quantity, calculating the average packet loss rate and the average heartbeat value, and obtain the first network score according to the calculation results. The calculation method of the second network score comprises: according to the packet loss rate and the heartbeat value in each data packet received by the data pool within the preset time after the latest bit rate adjustment and the second quantity, calculating the average packet loss rate and the average heartbeat value, and obtain the second network score according to the calculation results.

In the following disclosure, the flow will be illustrated with the embodiment. Take the packet loss rate *lost,* the heartbeat value *rtt,* and the first quantity *pre_num* in each of the data packets received by the data pool within the preset time before the latest bit rate adjustment as an example. The step is to first calculate the *avg_rtt* and *avg_lost* of *pre_num* packets and then calculate the first network score according to the following pseudocode:

```
if      ((avg_lost«=VIDEO_LOST_BEST_VAL)      &&      (avg_rtt«=VIDEO_RTT      _BEST_VAL))
score=VIDEO_NET_BEST_SCORE;
else if ((avg_lost«=VIDEO_LOST_BETTER_VAL) && (avg_rtt«=VIDEO_RTT_BETTER_VAL))
score=VIDEO NET BETTER SCORE;
else if ((avg_lost«=VIDEO_LOST_NORMAL_VAL) && (avg_rtt«=VIDEO_RTT _NORMAL _VAL))
score=VIDEO NET NORMAL_SCORE;
else
score=VIDEO_NET_BAD_SCORE;
```

Here, "&&" represents the logical operator "and", which means the expression on the left of && is calculated first. Once it is false, no matter how many expressions follow, it will not be calculated. The expression on the left is true, and then the expression on the right is calculated. If both the expressions are true, then the logical operation result is true.

Theoretically, the smaller the *avg_rtt* and *avg_lost,* the better. According to this rule, the thresholds of some of the above variable could be set, for example as follows:

| | |
|---|---|
| VIDEO_LOST_BEST_VAL: | 0 |
| VIDEO_RTT_BEST_VAL: | 20 |
| VIDEO_LOST_BETTER_VAL: | 7 |
| VIDEO_RTT_BETTER_VAL: | 100 |
| VIDEO_LOST_NORMAL_VAL: | 15 |
| VIDEO_RTT_NORMAL_SCORE: | 200 |
| VIDEO_NET_BEST_SCORE: | 100 |
| VIDEO_NET BETTER SCORE: | 75 |
| VIDEO_NET_NORMAL_SCORE: | 60 |
| VIDEO NET_BAD_SCORE: | 30 |

Similarly, for the data packets received by the data pool within the preset time after the latest bit rate adjustment, according to the packet loss rate *lost* and the heartbeat value *rtt* in each data packet and the second quantity *last_num,* the *avg_rtt* and *avg_lost* of the *last_num* data packets are calculated first. The second network score is calculated according to the above pseudo codes, and the settings of the above variable thresholds may be the same or different. It should be noted that the above variable thresholds are only examples, and can be changed flexibly. These changes fall within the scope of the present disclosure.

In addition, according to the first network score and the second network score, the step of updating the bit rate adjustment state further comprises: performing an operation on the first network score and the second network score to obtaining operation results to perform at least one of the following steps:

1) auto-incrementing the current index of the increasing bit rate table, updating the bit rate adjustment state to bit rate increasing, and updating the loop state to continue the loop to re-enter step S3. In some embodiments, the step of re-entering step S3 is: the current bit rate adjustment state is continued to be re-determined without waiting for the preset condition to be met before calling the algorithm. Since the current bit rate adjustment status is bit rate increasing, it directly enters the bit rate increasing processing flow.

2) adding the current index of the bit rate table to 0, updating the bit rate adjustment state to bit rate increasing, and updating the loop state to continue the cycle to re-enter step S3.

3) after reducing the current bit rate, setting the current index of the increasing bit rate table to 0, updating the bit rate adjustment state to bit rate increasing, and updating the loop state is to continue the loop to re-enter step S3.

4) updating the bit rate adjustment state to bit rate increased, updating the loop state to stop the loop, stop executing the bit rate increasing/decreasing processing flow to return to step S2 and step S3 in turn after the preset conditions is met. In some embodiments, the step of returning to execute step S2 and step S3 in sequence comprises: calling the algorithm again, firstly reading the data packets in the data pool within the preset time before and after the latest bit rate adjustment, and then determining the current bit rate adjustment status. Since the current bit rate adjustment state is bit rate increased, the bit rate increasing process flow is subsequently entered. Here, the preset condition may be a preset time, for example, after waiting for 1 second to start/invoke this algorithm to execute step S2 and step S3 in turn.

5) updating the bit rate adjustment state to reduce the bit rate according to the data packet sent by the external terminal, and updating the loop state to continue the loop to re-enter step S3. In some embodiments, the step S3 is continued and re-entered. That is, the current bit rate adjustment state is continued to be re-determined without waiting for the preset condition to be met before calling the algorithm. Since the current bit rate adjustment state is to reduce the bit rate according to the data packets sent by the external terminal, the subsequent the bit rate decreasing processing flow is directly entered.

6) reporting an error or exiting. In some embodiments, an error message can be output or the algorithm can be exited according to the operation result.

In the following disclosure, the flow will be illustrated with an embodiment, *pre_score* represents the first network score before bit rate adjustment, and *last_score* represents the second network score after bit rate adjustment. The flow firstly executes the following expression:

score=(pre_score «« 16) |last_score

Here, "««" represents the left shift operator, which shifts the binary bit to the left by a few bits, and fills the right with 0. "|" means bitwise OR. The calculation method of bitwise OR is to convert it into a binary code and then calculate. The operation rule is that if one is true, it is true. For example, 1|0=1, 1|1=1, 010=0, 0|1=1.

a) if the score obtained by the operation of the above expression is equal to any value in the following array T1, then *cur_index++*, determining the boundary of *cur_index [0:7]*, status=kIncreasing, loop=true *(loop=true* means continue to re-enter step S3, immediately determining the current status *status,* because *status==kIncreasing,* directly entering the bit rate increase processing flow without waiting until the preset condition is met(for example, wait for 1 second) for calling the algorithm next time).

T1={(VIDEO_NET_BEST_SCORE««16) | VIDEO_NET_BEST_SCORE,
(VIDEO_NET_BETTER_SCORE «« 16) | VIDEO_NET_BEST_SCORE,
(VIDEO_NET_NORMAL_SCORE«« 16) | VIDEO_NET_BEST_SCORE,
(VIDEO_NET_BAD_SCORE «« 16) | VIDEO_NET_BEST_SCORE,
(VIDEO_NET_NORMAL_SCORE««16) |VIDEO_NET_BETTER_SCORE,
(VIDEO_NET_BAD_SCORE «« 16) | VIDEO_NET_BETTER_SCORE}

The above-mentioned value in T1 is only an example and mainly expresses the meaning that the network condition is better after the bit rate adjustment. Therefore, it can also be other values that can express a similar meaning. This change also falls within the scope of the present disclosure.

b) if the score obtained from the above expression operation is equal to any value in the following array T2, then *cur_index=0, status=kIncreasing, loop=true.*
T2={(VIDEO_NET_BEST_SCORE««16)|VIDEO_NET_BETTER_SCORE,     (VIDEO_NET_BETTER_SCORE««16)| VIDEO_NET_BETTER_SCORE}

The above value in T2 is only an example and mainly expresses the meaning that the network conditions are good before and after the bit rate adjustment. Therefore, it can also be other values that can express a similar meaning. This change also falls within the scope of the present disclosure.

c) If the score obtained from the above expression is equal to any value in the following array T3, then *target_bitrate=cur_bitrate - increase_tab[cur_index], cur index=Q, status=kIncreasing, loop=true.*
T3={(VIDEO NET_BEST_SCORE««16)|VIDEONET_NORMAL _SCORE, (VIDEO_NET_BETTER_SCORE««16)|VIDEO_NET NORMAL_SCOREI

The above value in T3 is only an example and mainly represents a good network condition before the bit rate adjustment and a normal network condition after the bit rate adjustment. Therefore, it can also be other values that can express the same meanings. This change also falls within the scope of the present disclosure.

d) If the score obtained from the operation of the above expression is equal to any value in the following array T4, then *status=kIncreased, loop false*
T4={(VIDEO_NET_NORMAL_SCORE«16)| VIDEO_NET_NORMAL_SCORE, (VIDEO_NET_BAD_SCORE « 16) | VIDEO_NET_NORMAL_SCORE}

The above value in T4 is only an example, mainly expresses that the network condition is poor/normal before the bit rate adjustment and the network condition is normal after the bit rate adjustment, so it can also be other values that can express the same meanings. This change also falls within the scope of the present disclosure.

e) if the score obtained from the operation of the above expression is equal to any value in the following array T5, then *status=kDecreasingWithServer, loop=true.*

T5={(VIDEO_NET_BEST_SCORE<<16) | VIDEO_NET_BAD_SCORE, (VIDEO_NET_BETTER_SCORE<<16)|VIDEO_NET BAD_SCORE, (VIDEO_NET_NORMAL_SCORE<<16)|VIDEO_NET_BAD_SCORE, (VIDEO_NET_BAD_SCORE << 16) | VIDEO_NETBAD_SCORE}

The above value in T5 is only an example and mainly expresses the network condition is bad after the bit rate adjustment. Therefore, it can also be other values that can express the same meaning. This change also falls within the scope of the present disclosure.

f) reporting an error or exiting the algorithm.

The bit rate decreasing processing flow comprises following steps:

S321: determining whether the bit rate adjustment state is to reduce the bit rate according to the data packets sent by the external terminal; and when the bit rate adjustment state is to reduce the bit rate according to the data packets sent by the external terminal, calculating the target bit rate according to the data packets sent by the external terminal, updating the bit rate adjustment state to bit rate reduced, updating the loop state as stop the loop, and stopping executing the bit rate decreasing processing flow to return to step S2 and step S3 in sequence after the preset condition is met; when the bit rate adjustment state is not to reduce the bit rate according to the data packets sent by the external terminal, performing step S322. In some embodiments, the step of returning to step S2 and step S3 in sequence means that the algorithm is recalled to first read the data packets in the data pool within the preset time before and after the latest bit rate adjustment, and then determine the current bit rate adjustment status. Since the current bit rate adjustment state is bit rate reduced, the bit rate decreasing process flow is subsequently entered. Here, the preset condition may be a preset time, for example, after waiting for 1 second, this algorithm is started/called and step S2 and step S3 are executed in sequence.

S322: determining whether the bit rate adjustment state is not to reduce the bit rate according to the data packets sent by the external terminal; and when the bit rate adjustment state is not to reduce the bit rate according to the data packets sent by the external terminal, reducing the current bit rate, updating the bit rate adjustment state to bit rate reduced, updating the loop state to stop the loop, stopping executing the bit rate decreasing processing flow, and returning to execute step S2 and step S3 in sequence after the preset condition is met; when the bit rate adjustment state is to reduce the bit rate according to the data packets sent by the external terminal executing step S323.

S323: determining whether the second quantity is greater than 0; when the second quantity is greater than 0, performing step S324; the second quantity is not greater than 0 performing step S325.

S324: determining whether the second quantity is greater than a preset number threshold; when the second quantity is greater than a preset number threshold, updating the bit rate adjustment state according to the read data packets and a corresponding number; whether the second quantity is not greater than a preset number threshold, updating the loop state as stopping the loop to stop executing the bit rate decreasing processing flow and after the preset condition is met, returning to execute step S2 and step S3 in sequence.

S325: determining whether a time duration between the current time and the latest bit rate adjustment is greater than a time threshold; when the time duration between the current time and the latest bit rate adjustment is greater than the time threshold, updating the bit rate adjustment state to not reduce the bit rate according to the data packets sent by the external terminal, and updating the loop state as continuing the loop to re-enter and execute step S3; when the time duration between the current time and the latest bit rate adjustment is not greater than the time threshold, updating the loop as stop the loop to stop executing the bit rate decreasing processing flow and to return to step S2 and step S3 in turn after the preset condition is met. In some embodiments, the step of reentering S3 is: continuing to re-determine the current bit rate adjustment state without waiting for the preset condition to be met before calling the algorithm. Since the current bit rate adjustment state is not to reduce the bit rate according to the data packets sent by the external terminal, the bit rate decreasing processing flow is directly entered subsequently.

In order to optimize the execution effect of the algorithm, after determining that the second quantity is greater than 0 in step S323, the following steps are further performed: determining whether there is a sudden change in the data packets received by the data pool within a preset time after the latest bit rate adjustment; if there is no sudden change, performing step S324; and when there is a sudden change, updating the bit rate adjustment state to reduce the bit rate according to the data packets sent by the external end and updating the loop state as continue the loop to re-enter step S3. In some embodiments, the step of reentering step S3 is: continuing to re-determine the current bit rate adjustment state without waiting for the preset condition to be met before calling the algorithm. Since the current bit rate adjustment state is to reduce the bit rate according to the data packets sent by the external terminal, the bit rate decreasing processing flow is directly entered subsequently. The specific determining mechanism for determining whether there is a sudden change is the same as the determining mechanism for determining whether there is a sudden change in the above-mentioned bit rate increasing processing flow, and thus further illustration is omitted here.

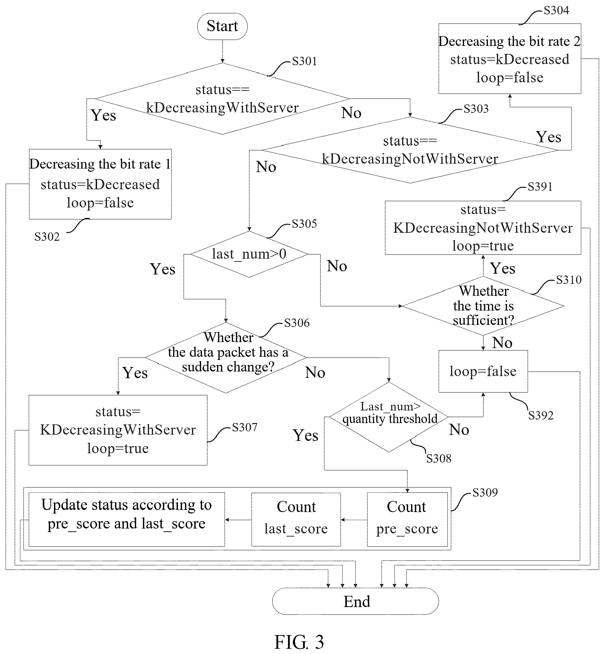

Please refer to Fig. 3. Fig. 3 is a flow chart of a bit rate decreasing processing flow according to an embodiment of the present disclosure.

S301: after entering the bit rate decreasing processing flow, first determining whether the bit rate adjustment state is to reduce the bit rate according to the data packets sent by the server *(status==kDecreasingWithServer),* corresponding to step S321.

S302: if *status==kDecreasingWithServer,* executing the bit rate decreasing processing flow 1 (calculating the target bit rate according to the data packets sent by the server), updating the bit rate adjustment state to bit rate decreased (*status=kDecreased), juxtapose loop false,* corresponding to step S321. That is, when the status is in *kDecreasingWithServer,* the bit rate is reduced. After that, the *status* becomes *kDecresed.* At the same time, the bit rate decreasing processing flow should end, so the corresponding *loop false* means to exit the algorithm and wait for the preset condition (for example, wait for 1 second) to be met before starting/calling the algorithm next time. After the algorithm is started next time, step S2 and step S3 are performed in sequence. In step S3, since *status==kDecresed,* the bit rate decreasing processing flow is still entered.

Furthermore, the step of calculating the target bit rate according to the data packets sent by the server is: calculating the average number of data bytes *avg_sent_size* and the average time interval *avg_time_ms* according to the number of data bytes *sent_size* of each data packet, the time interval *time_ms,* and the second quantity *last num* of the data packets received by the data pool within the preset time after the most recent bit rate adjustment; and calculating the target bit rate *target_bitrate* according to the average number of data bytes avg_sent_size and the average time interval avg_time_ms.

The expression of target bit rate *target_bitrate* can be:

$$target\_bitrate = (avg\_sent\_size * K1 / avg\_time\_ms) * K2.$$

Here, K1 is the unit conversion factor. For example, the unit of *target_bitrate* is bps. The unit of *avg_sent_size* is Byte. 1Byte=8 bit. The unit of *avg_time_ms* is milliseconds. 1 second = 1000 milliseconds. Therefore, the unit conversion factor K1 is taken as 8000 here. K2 is a preset adjustment coefficient, such as 0.65. It should be noted that the values of K1 and K2 here are only examples. K1 can be adjusted according to different units, and K2 can also be changed according to actual network conditions. These changes fall within the scope of the present disclosure.

S303: if the status is not *kDecreasingWithServer,* determining whether the bit rate adjustment state is not to reduce the bit rate according to the data packets sent by the server (*status==kDecreasingNotWithServer),* corresponding to step S322.

S304: if *status==kDecreasingNotWithServer,* executing the bit rate decreasing processing flow 2 (directly reducing the current bit rate), and updating the bit rate adjustment state to be bit rate reduced (*status kDecreased).* and juxtapose *loop false,* corresponding to step S322. That is, when the *status* is in *KDecreasingNotWithServer,* the bit rate is reduced. After that, the *status* becomes *kDecresed.* At the same time, the bit rate decreasing processing flow should end, so the corresponding *loop false* means to exit the algorithm and wait for the preset condition (for example, wait for 1 second) to be met before starting/calling the algorithm next time. After the algorithm is started next time, step S2 and step S3 are performed in sequence. In step S3, since *status==kDecresed,* the bit rate decreasing processing flow is still entered. Here, in the step of directly reducing the current bit rate could, for example, reduce the target bit rate half of the current bit rate. It should be noted that directly reducing the current bit rate by its half is just an example. Here, it means that the bit rate is not reduced according to the data sent by the server. For example, the target bit rate can also be reduced to one-third of the current bit rate. These changes are made according to actual network conditions and fall within the scope of the present disclosure.

S305: if the status is not *kDecreasingNotWithServer,* further determining whether the number of data packets last_num received by the data pool within the preset time after the latest bit rate adjustment is greater than 0, corresponding to step S323.

S306: if *last_num* > 0, it means that the data pool has received the data packets sent by the server after the bit rate is reduced. At this time, it is necessary to check whether the data packets have a sudden change (*checksmooth*). Further illustrations are omitted here.

S307: if the data packets have a sudden change, the *status* changes to *KDecreasingWithServer* (reducing the bit rate according to the data packets sent by the server), and the corresponding *loop=true.* It means to continue the loop and re-enter step S3 to determine the status immediately. Since *status==KDecreasingWithServer,* it will directly enter the bit rate decreasing processing flow. At this time, there is no need to pause and wait for the next time after the preset condition is met (for example, wait for 1 second) to restart/invoke the algorithm.

S308: if there is no sudden change in the data packets, determining whether *last num* is greater than a preset number threshold (for example, 3), corresponding to step S324.

S309: if *last_num* > preset number threshold, updating the bit rate adjustment state according to the read data packets before and after the latest bit rate adjustment and the corresponding quantity, corresponding to step S324. The bit rate adjustment status is updated according to the read data packets before and after the latest bit rate adjustment and the corresponding quantity. This operation could be referred to the same step in the above-mentioned bit rate increasing processing flow and further illustrations are omitted here.

S310: if last _num=0, it means that the data pool has not received the data packets sent by the server after the bit rate is reduced, and it is further determined whether the time is sufficient (time_out), corresponding to step S325.

S391: if the time is sufficient (*time_out==true*), it means that the network is congested, and the bit rate should be further reduced at this time, so the status becomes *KDecreasingNotWithServer* (the bit rate is not reduced according to the data sent by the server (for example, the bit rate is directly reduced to the half of the current bit rate)), corresponding *loop=true*, corresponding to step S325. *loop=true* means to continue the loop and re-enter S3 to determine the *status* immediately. Since *status==KDecreasingNotWithServer,* it will directly enter the bit rate decreasing processing flow. At this time, there is no need to pause and wait for the preset condition (for example, wait for 1 second) to be met to start/call the algorithm again next time.

S392: if *last num* <= preset number threshold or if the time is not sufficient (*time_out==false*), set *loop false* (respectively corresponding to step S324 and step S325). That is, it means to exit the algorithm, wait for the preset condition (for example, wait for 1 second) to be met, and then start/invoke the algorithm next time to perform step S2 and step S3 in sequence.

The preset number threshold of *last_num* and the value of *time_out* are only examples and may be changed according to actual network conditions. These changes fall within the scope of the present disclosure.

The data transmission rate control method according to an embodiment of the present disclosure has less statistical information data transmitted between the server and the client, can calculate the current bandwidth accurately and quickly, and adjust the bit rate of the data sent by the client to the server in time. Therefore, the data transmission rate control method could implement an efficient congestion control.

Based on the same inventive concept, the present disclosure also provides a data transmission rate control system.

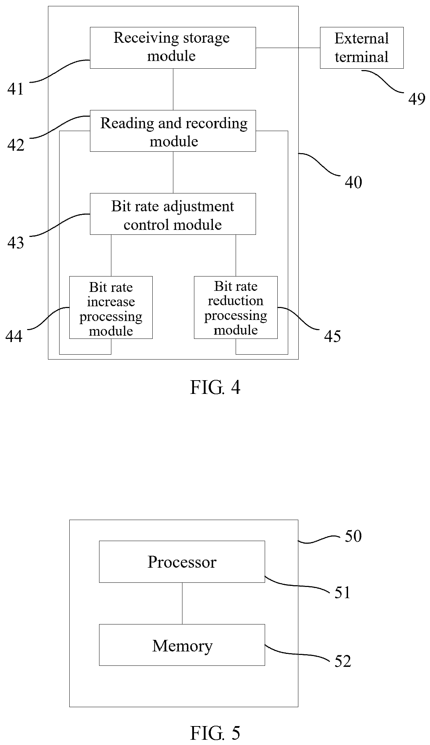

Please refer to Fig. 4. Fig. 4 is a diagram of a data transmission rate control system according to a third embodiment of the present disclosure. The data transmission rate control system comprises: a receiving storage module 41, a reading and recording module 42, a bit rate adjustment control module 43, a bit rate increase processing module 44 and a bit rate reduction processing module 45.

The receiving storage module 41 is used to receive and store the data packets sent by the external terminal 49 to the local terminal 40. The data packet includes at least one of the following: the time interval *time_ms* from the last time the external terminal sends data to the local terminal; the data byte number *sent_size* of the data sent by the local terminal and received by the external terminal within the time interval; the total packet loss rate *lost* during the time interval. When receiving and buffering the data packets sent by the server, the receiving storage module 41 further adds a timestamp *received_ts* to the data packet for subsequent use.

The reading and recording module 42 is configured to respectively read the data packets received by the receiving storage module 41 within the preset time before and after the latest bit rate adjustment and record the corresponding quantity of the read data packets. For the specific reading and recording methods, please refer to the above disclosure of step S2 in the above-mentioned data transmission rate control method. Further illustrations are omitted here.

The bit rate adjustment control module 43 is configured to determine the current bit rate adjustment state and call the bit rate increasing processing module 44 or the bit rate reduction decreasing module 45 according to the first determination result.

The bit rate increase processing module 44 is configured to perform a bit rate increasing processing flow. The operation of increasing the bit rate includes updating the bit rate adjustment state according to the read data packets and the corresponding quantity. For the specific processing method of increasing the bit rate, please refer to the above disclosure of step S3 in the above-mentioned data transmission rate control method. Further illustrations are omitted here.

The bit rate decrease processing module 45 is configured to perform a bit rate decreasing processing flow. The processing of reducing the bit rate includes updating the bit rate adjustment state according to the read data packets and the corresponding quantity. For the specific processing method of reducing the bit rate, please refer to the above disclosure of step S3 in the above-mentioned data transmission rate control method. Further illustrations are omitted here.

The bit rate increasing/decreasing processing flows further includes determining the loop state of the bit rate increasing/decreasing processing flows, continuing to re-call the bit rate adjustment control module 43 according to the second determination result or stopping the execution of the increasing/decreasing code, and sequentially called the receiving and recording module 42 and the bit rate adjustment control module 43 again after the preset condition is met.

The receiving storage module 41, the reading and recording module 42, the bit rate adjustment control module 43, the bit rate increase processing module 44 and the bit rate decrease processing module 45 are all disposed on the local terminal 40.

The data transmission rate control system according to an embodiment of the present disclosure has less statistical information data transmitted between the server and the client, can calculate the current bandwidth accurately and quickly, and adjust the bit rate of the data sent by the client to the server in time. Therefore, the data transmission rate control method could implement an efficient congestion control.

Based on the same inventive concept, the present disclosure also provides a user equipment for data transmission rate control.

Please refer to Fig. 5. Fig. 5 is a diagram of a user equipment used in a data transmission rate control system according to a fourth embodiment of the present disclosure. The user equipment 50 includes a processor 51 and a memory 52. The memory 52 is used to store one or more computer-executable instructions. The one or more computer-executable instructions could be executed by the processor 51 to perform the above-mentioned data transmission rate control method.

Based on the same inventive concept, the present disclosure also provides a computer-readable storage medium storing computer-executable instructions. When the computer-executable instructions are executed, the method as described above in the present disclosure is performed.

The methods described in embodiment of the present disclosure can be implemented using computer systems or architectures known to those skilled in the correlating field for implement. Computer systems, such as PDAs, smart phones, laptops, servers, clients, or any other type of special purpose or general purpose computing device, may be used as applicable or suitable for a particular application or environment. The computer system may include multiple processors, which may use a general-purpose or special-purpose processing engine such as a microprocessor, microcontroller, or other control processing module to implement.

The computer system also includes a main memory for storing information and instructions to be executed by the processor, such as a random access memory (RAM) or other dynamic memory. This main memory can also be used for temporarily storing variables or other intermediate information during the execution of the storage instructions to be executed by the processor. The computer system also includes a read-only memory (ROM) or other static storage devices for storing static information and processor instructions for the processor.

The computer system also includes an information storage system, which includes, for example, a media drive and a removable storage interface. Media drives includes drives or other mechanisms to support fixed or removable storage media, such as hard drives, floppy drives, tape drives, optical drives, compact discs (CDs), digital video drives (DVDs), read or write drive (R or RW), or other removable or fixed media drives. For example, storage media includes, for example, hard disks, floppy disks, magnetic tapes, optical disks, CDs or DVDs, or other fixed or removable media that are read and written by a media drive. The storage media includes computer-readable storage media with specific computer software or data of the storage therein.

In an optional embodiment, an informational storage system may include other similar components for allowing computer-executable instructions or other instructions or data to be loaded into the computer system. For example, these components may include removable storage units and interfaces, (such as program cartridges and cartridge interfaces), removable storages (e.g., flash memory or other removable storage modules) and storage slots, and other removable storage units and interfaces that allow software and data can transfer from the removable storage unit to the computer system.

The computer system also includes a communication interface. Such communication interfaces may be used to allow software and data to be transferred between computer systems and external devices. In this embodiment, the communication interface may include a modem, a network interface (e.g., an Ethernet or other NIC card), a communication port (e.g., a universal serial bus (USB) port), a PCMCIA slot and card, and the like. The software and data transmitted through the communication interface are transmitted in the form of signals, which may be electronic, electromagnetic, optical or other signals that can be received by the communication interface medium.

As used herein, the terms "computer-executable instructions," "computer-readable medium," and the like may generally be used to refer to tangible media, e.g., a memory, a storage device or a storage unit. These and other forms of computer readable media store one or more instructions executable by a processor of a computer system to perform specified operations. These instructions, commonly referred to as "computer program code" (which may be combined in the form of a computer program or in other combinations), when executed, cause a computer system to perform the functions of the embodiment of the present disclosure. Note that the computer program code directly causes the processor to perform certain operations, be compiled to do so, and/or be combined with other software, hardware and/or firmware (e.g., libraries that perform standard functions) to do so.

The non-transitory computer readable medium includes hard disks, compact disc read only memory (CD-ROM), optical storage devices, magnetic storage devices, Read Only Memory (ROM), Programmable Only Read memory (PROM), Erasable Programmable Read Only Memory (EPROM), electrically Erasable Programmable Read Only Memory (EEPROM)) and flash memory, alone or in combination.

In an embodiment implemented by software instructions, the software instructions are stored in a computer readable medium, for example, a removable storage drive, and loaded into a computer system. When executed by a processor in a computer system, the control modules (in this example, software instructions or executable computer program code) cause the processor to perform the functions of the present disclosure as described herein.

Furthermore, the concepts of the present disclosure may be applied to any circuit for performing signal processing functions within the network component. It is further contemplated that, for example, semiconductor manufacturers may use the concepts of the present disclosure in the design of stand-alone devices, such as digital signal processors (DSPs) or microcontrollers of application-specific integrated circuits (ASICs). and/or any other subsystem component.

It will be appreciated that the embodiment of the present disclosure has been described above with reference to a single processing logic for clarity purposes. However, the concept of the present disclosure can also use different functional units and processors to implement signal processing functions. Accordingly, references to particular functional units are to be regarded only as references to suitable means for providing the described functionality, rather than a strict logical or physical structure or organization.

Various embodiments of the present disclosure may be implemented in any suitable form including hardware, software, firmware, and any combination thereof. Optionally, the present disclosure comes to the implement at least in part as computer software running on one or more data processors and/or digital signal processors or configurable modular component such as an FPGA device. Thus, the components of the embodiment of the present disclosure are physically, functionally and logically implement in any suitable manner. In fact, functions can be realized by a single unit, multiple units or part of other functional units.

Above are embodiments of the present disclosure, which does not limit the scope of the present disclosure. Any modifications, equivalent replacements or improvements within the spirit and principles of the embodiment described above should be covered by the protected scope of the disclosure.

**Claims**

1. A data transmission rate control method, comprising:

    S1: receiving and storing data packets sent by an external terminal to a local terminal;
    S2: reading the data packets received in the local terminal within a preset time before and after a latest bit rate adjustment, and recording a corresponding quantity of the read data packets; and
    S3: determining a current bit rate adjustment state, and entering a bit rate increasing/decreasing processing flow according to a first determination result;
    wherein the bit rate increasing/decreasing processing flow comprises updating a bit rate adjustment state according to the read data packets and the corresponding quantity.

2. The method of claim 1, wherein the step S3 further comprises:
    determining a loop state of the bit rate increasing/decreasing processing flow, continuing to re-enter step S3 according to a second determination result, or stop executing the bit rate increasing/decreasing processing flow, and after a preset condition is met, returning to execute step S2 and step S3 in sequence.

3. The method of claim 1, wherein the data packets comprise at least one of the following:

a time interval from a last time the external terminal sends a data packet to the local terminal;
a number of data bytes of data sent by the local terminal received by the external terminal within the time interval; and
a total packet loss rate occurred during the time interval.

4.  The method of claim 1, wherein the step S2 further comprises:

    S21: reading the data packets received in the local terminal within a preset time before a latest bit rate adjustment, and recording a first quantity of the read data packets;
    S22: reading the data packets received in the local terminal within the preset time after the latest bit rate adjustment, and record a second quantity of the read data packets; and
    S23: according to a heartbeat value corresponding to a timestamp printed when the data packet is received, adding a corresponding heartbeat value to each data packet read in steps S21 and S22.

5.  The method of claim 1, wherein the step S3 further comprises:
    presetting an initial state of the bit rate adjustment state to bit rate increasing.

6.  The method of claim 1, wherein the step S3 further comprises:
    if a current bit rate adjustment state is bit rate increasing or bit rate increased, entering the bit rate increasing processing flow, otherwise entering the bit rate decreasing processing flow.

7.  The method of claim 4, wherein the step of the bit rate increasing processing flow in step S3 further comprises:

    S311: determining whether the bit rate adjustment state is bit rate increasing , and when the bit rate adjustment state is bit rate increasing , directly increasing the bit rate, updating the bit rate adjustment state to bit rate increased, updating a loop state to stop the loop, and stop executing the bit rate increasing processing flow and returning to execute step S2 and step S3 in sequence after a preset condition is met, when the bit rate adjustment state is not bit rate increasing, performing step S312;
    S312: determining whether the second quantity is greater than 0, when the second quantity is greater than 0, performing step S313, when the second quantity is not greater than 0 performing step S314;
    S313: determining whether the second quantity is greater than a quantity threshold, when the second quantity is greater than the quantity threshold, updating the bit rate adjustment state according to the read data packets and the corresponding quantity, when the second quantity is not greater than the quantity threshold, updating the loop state to stop the loop, stopping executing the bit rate increase processing flow and returning to execute step S2 and step S3 in sequence after the preset conditions is met; and
    S314: determining whether a time duration between a current time and the latest bit rate adjustment is greater than a time threshold, and when the time duration between the current time and the latest bit rate adjustment is greater than the time threshold, updating the bit rate adjustment state to not reduce the bit rate according to the data packet sent by the external terminal, and updating the loop state to continue the loop, continuing to re-enter and perform step S3, when the time duration between the current time and the latest bit rate adjustment is not greater than the time threshold updating the loop state to stop the loop, stopping performing the bit rate increasing processing flow and returning to execute step S2 and step S3 in sequence after the preset condition is met.

8.  The method of claim 7, wherein the step of directly increasing the bit rate in step S311 further comprises:

    adjusting a target bit rate to a sum of a current bit rate and a corresponding bit rate in an increasing bit rate table corresponding to a current index; and
    auto-incrementing the current index after adjusting the target bit rate.

9.  The method of claim 8, wherein the step of auto-incrementing the current index further comprises:

    determining a boundary of the current index after auto-incrementing the current index; and
    when the current index after auto-incrementing the current index exceeds a maximum value of a preset index boundary, setting the current index as the maximum value.

10. The method according to claim 7, further comprising: after determining that the second quantity is greater than 0 in step S312, further performing following steps:

determining whether the data packets read in step S22 have a sudden change;

when there is no sudden change, performing step S313; and

when there is a sudden change, updating the bit rate adjustment state to reduce the bit rate according to the data packet sent by the external terminal, and updating the loop state to continue the loop, continuing to re-enter and perform step S3.

11. The method of claim 4, wherein the step of the bit rate decreasing processing flow described in the step S3 comprises:

S321: determining whether the bit rate adjustment state is to reduce the bit rate according to the data packets sent by the external terminal; and when the bit rate adjustment state is to reduce the bit rate according to the data packets sent by the external terminal, calculating a target bit rate according to the data packets sent by the external terminal, updating the bit rate adjustment state to bit rate reduced, and updating the loop state to stop the loop, stopping executing the bit rate decreasing processing flow and returning to execute step S2 and step S3 in sequence after the preset condition is met; when the bit rate adjustment state is not to reduce the bit rate according to the data packets sent by the external terminal, executing step S322;

S322: determining whether the bit rate adjustment state is not to reduce the bit rate according to the data packets sent by the external terminal; when the bit rate adjustment state is not to reduce the bit rate according to the data packets sent by the external terminal, reducing the current bit rate, updating the bit rate adjustment state to bit rate reduced, and updating the loop state to stop the loop, stopping executing the bit rate decreasing processing flow and returning to execute step S2 and step S3 in sequence after the preset condition is met, when the bit rate adjustment state is to reduce the bit rate according to the data packets sent by the external terminal, reducing the current bit rate, executing step S323;

S323: determining whether the second quantity is greater than 0; when the second quantity is greater than 0, executing step S324; the second quantity is not greater than 0, executing step S325;

S324: determining whether the second quantity is greater than a preset number threshold; when the second quantity is greater than a preset number threshold, updating the bit rate adjustment state according to the read data packets and the corresponding quantity; when the second quantity is not greater than a preset number threshold,, updating the loop state to stop the loop, stopping executing the bit rate decreasing processing flow and after the preset condition is met, returning to execute step S2 and step S3 in sequence; and

S325: determining whether a time duration between a current time and the latest bit rate adjustment is greater than a time threshold; when the time duration between the current time and the latest bit rate adjustment is greater than a time threshold, updating the bit rate adjustment state to not reduce the bit rate according to the data packets sent by the external terminal, and updating the loop state to continue the loop, continuing to re-enter and execute step S3; when the time duration between the current time and the latest bit rate adjustment is not greater than a time threshold, updating the loop state to stop the loop, stopping executing the bit rate decreasing processing flow and after the preset condition is met, returning to execute step S2 and step S3 in sequence.

12. The method of claim 11, wherein the step of calculating the target bit rate according to the data packets sent by the external terminal in step S321 further comprises:

calculating an average number of data bytes and an average time interval according to a number of data bytes, a time interval in each of the data packets read in step S22, and the second quantity; and

calculating the target bit rate according to the average number of data bytes and the average time interval.

13. The method of claim 11, further comprising:

after determining that the second quantity is greater than 0 in the step S323, further performing the following steps: determining whether the data packets read in the step S22 have a sudden change; when there is no sudden change, executing step S324; and when there is a sudden change, updating the bit rate adjustment state to reduce the bit rate according to the data packets sent by the external terminal and updating the loop state to continue the loop, continuing to re-enter and perform step S3.

14. The method of claims 10 or 13, wherein the step of determining whether the data packets read in step S22 have a sudden change comprises:

calculating an average packet loss rate according to a packet loss rate of each data packet in the data packets read in step S22 and the second quantity; and when the average packet loss rate is less than a preset packet loss threshold, determining that there is no sudden change; when the average packet loss rate is not less than a preset packet loss threshold, determining that there is a sudden change; and/or
calculating an average heartbeat value according to a heartbeat value of each data packet in the data packet read in step S22 and the second quantity; and when the average heartbeat value is less than a preset heartbeat threshold, then determining that there is no sudden change; when the average heartbeat value is not less than a preset heartbeat threshold, determining that there is a sudden change.

15. The method of claims 4, 7 or 11, wherein the step of updating the bit rate adjustment state according to the read data packets and the corresponding quantity further comprises:

calculating a first network score before a latest bit rate adjustment according to the data packets read in step S21 and the first quantity;
calculating a second network score after the latest bit rate adjustment according to the data packets read in step S22 and the second quantity; and
updating the rate adjustment state according to the first network score and the second network score.

16. The method of claim 15, wherein the step of calculating the first network score comprises: according to the packet loss rate and heartbeat value in each data packet in the data packets read in step S21 and the first quantity, calculating the average packet loss rate and the average heartbeat value and obtaining the first network score according to the calculation result; and the step of calculating the second network score comprises: according to the packet loss rate and heartbeat value in each data packet in the data packets read in step S22 and the second quantity, calculating the average packet loss rate and the average heartbeat value and obtaining the second network score according to the calculation result.

17. The method of claim 15, wherein the step of updating the rate adjustment state according to the first network score and the second network score comprises:
performing an operation on the first network score and the second network score to obtain an operation result and perform at least one of the following steps:

auto-incrementing a current index of the increasing bit rate table, updating the bit rate adjustment state to bit rate increasing, and updating the loop state to continue the loop, continuing to re-enter and perform step S3;
setting the current index of the increase bit rate table to 0, updating the bit rate adjustment state to bit rate increasing, and updating the loop state to continue the loop, continuing to re-enter and perform step S3;
after reducing the current bit rate, setting the current index of the increasing bit rate table to 0, updating the bit rate adjustment state to bit rate increasing, and updating the loop state to continue the loop, continuing to re-enter and perform step S3;
updating the bit rate adjustment state to bit rate increased, updating the loop state to stop the loop, stopping executing the increase/decrease bit rate processing flow and after the preset condition is met, returning to execute step S2 and step S3 in sequence;
updating the bit rate adjustment state to reduce the bit rate according to the data packets sent by the external terminal and updating the loop state to continue the loop, continuing to re-enter and perform step S3; and
reporting an error or exiting.

18. A data transmission rate control system, comprising:

a receiving storage module, configured to receive and store data packets sent by the external terminal to the local terminal;
a reading and recording module, configured to read the data packets received by the receiving storage module within a preset time before and after a latest bit rate adjustment and record a corresponding quantity of the read data packets;
a bit rate adjustment control module, configured to determine a current bit rate adjustment state and calling the bit rate increase/decrease processing module according to a determination result; and
a bit rate increase/decrease processing module, configured to perform a bit rate increasing/decreasing processing flow;
wherein the bit rate increasing/decreasing processing flow comprises updating the current bit rate adjustment state according to the data packets read by the reading and recording module and the corresponding quantity.

19. A user equipment for controlling data transmission rate, comprising:

a processor; and
a memory, storing one or more computer-executable instructions;
wherein the one or more computer-executable instructions are executed by the processor to perform the method as claimed in any one of claims 1-17.

20. A computer readable storage media storing computer-executable instructions, wherein the computer-executable instructions are executed by a processor to perform the method as claimed in any one of claims 1-17.

| Receive and store data packets sent by an external terminal to a local terminal. | S1 |

| Read the data packets received in the local terminal within a preset time before and after a latest bit rate adjustment, and record a corresponding quantity of the read data packets. | S2 |

| Determine a current bit rate adjustment state, and enter a bit rate increasing/decreasing processing flow according to a first determination result, where the bit rate increasing/decreasing processing flow comprises updating a bit rate adjustment state according to the read data packets and the corresponding quantity. | S3 |

FIG. 1A

Start

Read the data packets received in the local terminal within a preset time before a latest bit rate adjustment, and record a first quantity of the read data packets.

S21

S2

S1

Receive and store a data packets sent by an external terminal to a local terminal.

Read the data packets received in the local terminal within the preset time after the latest bit rate adjustment, and record a second quantity of the read data packets.

S22

According to a heartbeat value corresponding to a timestamp printed when the data packet is received, add a corresponding heartbeat value to each data packet read.

S23

Determine the current bit rate adjustment state.

S31

S3

Increase

Enter the bit rate increasing processing flow.

S32

Decrease

Enter the bit rate decreasing processing flow.

S33

Determine the loop state.

S34

Continue the loop

Stop

End

FIG. 1B

Start

status==
kIncreasing ⟋S201

Yes

No

Increasing the bit rate.
status=kIncreased
loop=false
S202⟋

last_num>0 ⟋S203

Yes No

Whether
the data packet has a
sudden change? ⟋S204

Yes No

status=
KDecreasingWithServer
loop=true ⟋S205

Last_num>
quantity threshold ⟋S206

Yes No

Update status according to
pre_score and last_score

Count
last_score

Count
pre_score ⟋S207

status=
KDecreasingNotWithServer
loop=true ⟋S209

Yes

Whether
the time is
sufficient? ⟋S208

No

loop=false ⟋S210

End

FIG. 2

Start

status==
kDecreasingWithServer ⌐S301

Yes                                        No

Decreasing the bit rate 1
status=kDecreased
loop=false

S302

status==
kDecreasingNotWithServer ⌐S303

No                                         Yes

Decreasing the bit rate 2
status=kDecreased
loop=false ⌐S304

last_num>0 ⌐S305

Yes                                        No

Whether
the data packet has a
sudden change? ⌐S306

Yes                     No

status=
KDecreasingWithServer
loop=true ⌐S307

status=
KDecreasingNotWithServer
loop=true ⌐S391

Yes

Whether
the time is
sufficient? ⌐S310

No

loop=false

S392

Last_num>
quantity threshold ⌐S308

Yes                     No

Update status according to
pre_score and last_score        Count
last_score        Count
pre_score ⌐S309

End

FIG. 3

| Receiving storage module |
|---|

41

| External terminal |
|---|

49

| Reading and recording module |
|---|

42

40

| Bit rate adjustment control module |
|---|

43

| Bit rate increase processing module |
|---|

44

| Bit rate reduction processing module |
|---|

45

FIG. 4

| Processor |
|---|

50

51

| Memory |
|---|

52

FIG. 5

## INTERNATIONAL SEARCH REPORT

| International application No. |
|---|
| **PCT/CN2021/076003** |

**A.  CLASSIFICATION OF SUBJECT MATTER**

H04L 12/00(2006.01)i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

VEN; USTXT; EPTXT; WOTXT; CNABS; CNTXT; CNKI: 码率, 传输, 发送, 速率, 速度, 自适应, 自动, 调整, 增, 多, 减, 少, 时延, 延时, 延迟, 丢包, 网络, 堵塞, 拥堵, 带宽, code, bit, rate, transmission, receive, delivery, adaptive, adjust, update, change, increase, decrease, packet loss, delay, bandwidth

**C.  DOCUMENTS CONSIDERED TO BE RELEVANT**

| Category* | Citation of document, with indication, where appropriate, of the relevant passages | Relevant to claim No. |
|---|---|---|
| PX | CN 111193673 A (HISCENE (SHANGHAI) INFORMATION TECHNOLOGY CO., LTD.) 22 May 2020 (2020-05-22) entire document | 1-20 |
| X | CN 107438031 A (CHENGDU 30KAITIAN COMMUNICATION INDUSTRY CO., LTD.) 05 December 2017 (2017-12-05) description, paragraphs [0016]-[0024], figures 1-6 | 1-6, 15, 16, 18-20 |
| A | CN 107342848 A (HANGZHOU LIANJI TECHNOLOGY CO., LTD.) 10 November 2017 (2017-11-10) entire document | 1-20 |
| A | CN 103004154 A (MATSUSHITA ELECTRIC INDUSTRY CO., LTD.) 27 March 2013 (2013-03-27) entire document | 1-20 |
| A | CN 105490772 A (SHENYANG AIRCRAFT DESIGN INSTITUTE, AVIATION INDUSTRY CORPORATION OF CHINA et al.) 13 April 2016 (2016-04-13) entire document | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 April 2021** | **29 April 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/076003**

## C. DOCUMENTS CONSIDERED TO BE RELEVANT

| Category* | Citation of document, with indication, where appropriate, of the relevant passages | Relevant to claim No. |
|---|---|---|
| A | US 9641578 B2 (ARRIS Enterprises, Inc.) 02 May 2017 (2017-05-02)<br>entire document | 1-20 |

Form PCT/ISA/210 (second sheet) (January 2015)

INTERNATIONAL SEARCH REPORT
Information on patent family members

International application No.

**PCT/CN2021/076003**

| Patent document cited in search report | | | Publication date (day/month/year) | Patent family member(s) | | | Publication date (day/month/year) |
|---|---|---|---|---|---|---|---|
| CN | 111193673 | A | 22 May 2020 | CN | 111193673 | B | 25 August 2020 |
| CN | 107438031 | A | 05 December 2017 | | None | | |
| CN | 107342848 | A | 10 November 2017 | CN | 107342848 | B | 01 May 2020 |
| CN | 103004154 | A | 27 March 2013 | JP | WO2012172795 | A1 | 23 February 2015 |
| | | | | US | 2013142243 | A1 | 06 June 2013 |
| | | | | US | 8804803 | B2 | 12 August 2014 |
| | | | | WO | 2012172795 | A1 | 20 December 2012 |
| | | | | JP | 5919527 | B2 | 18 May 2016 |
| | | | | CN | 103004154 | B | 02 December 2015 |
| CN | 105490772 | A | 13 April 2016 | CN | 105490772 | B | 28 June 2019 |
| US | 9641578 | B2 | 02 May 2017 | US | 2016294898 | A1 | 06 October 2016 |

Form PCT/ISA/210 (patent family annex) (January 2015)

**EP 4 135 262 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010278035